# EUROPEAN PATENT APPLICATION

(11) **EP 3 239 626 A1**
(43) Date of publication of application: **01.11.2017**
(21) Application number: 16461515.5
(22) Date of filing: 27.04.2016
(51) Int. Cl.: F25B 30/02, G05B 13/02, G05B 17/02

(54) **METHOD FOR CONTROLLING HEAT PUMP OPERATION**

(71) Applicant: PLUM spólka z ograniczona odpowiedzialnoscia, Ignatki 16-001 Kleosin (PL)
(72) Inventor: Szumski, Michal, 15-161 Bialystok (PL)
(74) Representative: Sielewiesiuk, Jakub

(57) **Abstract**

The invention relates to a method for controlling the heat pump, and in particular to a method for controlling the expansion valve for adjusting the superheating of the working medium, wherein the dew point (ps) is determined by means of a unidirectional neural network; a method for controlling the process of thawing the exchanger of the lower heat source, wherein based on the measurement and analysis of the temperature difference upstream and downstream of the exchanger of the lower source of the heat pump, of air humidity and instantaneous power of the compressor, the value of energy obtained from the lower source of the heat pump in a characteristic period of time is determined, and this value is compared to adequate historical data, wherein the compressor in the thawing mode is activated only when the current value of energy is lower than the set percentage of the energy value taken from historical data; and a method for controlling the switching on of the compressor, wherein coefficient of heat demand Qh of the heated building is dynamically determined based on the difference between the set and current values of the heating circuit supply and based on measurements of temperature and humidity of outside air. The method according to the invention allows an increase in the efficiency of the heat pump through accurate adjustment of the superheating of the cooling medium upstream of the evaporator, optimisation of the operation periods of the compressor, reduction of defrosting operations of the exchanger of the lower source, heat accumulation in peak sources and minimisation of the need to use additional heat sources to ensure operation of the compressor within the operating envelope.

## Description

### Technical field

The invention relates to a method for controlling heat pump operation, and in particular to a method for controlling the expansion valve for adjusting the superheating of the working medium, a method for controlling the process of thawing the heat exchanger of the lower heat source and a method for controlling the switching on of the compressor.

### Background of the invention

There are known solenoid valves for heat pumps, which control superheating of a working medium.

For example, controllers of the expansion valve of DN33 Series provided by Carel are designed primarily for refrigeration. They have the ability to directly control the compressor, the evaporator fan and the defrosting process. They are equipped with five inputs for temperature sensors three of which may be configured as digital inputs. The controllers of DN33 Series have the following adjustment modes: (i) controller for refrigeration - adjustment of the thermostat, defrosting, time delays, (ii) thermostat in the "direct" mode (cooling without functions related to defrosting), (iii) thermostat in the "reverse" mode (heating without functions related to cooling or defrosting). These controllers have the automatic function for changing the setting of the setpoint, where the value can be switched by the contact between two predefined values.

In turn, the controllers of the expansion valve of EVD Series provided by Carel are designed for direct control of the expansion valve (e.g. E2V type from Carel). Series of EVD controllers is the result of experience gained by Carel and is a successor or a device with extended functionality in comparison to the series of DN33 controllers. Devices of EVD series have the ability to set the superheating value to a constant value, and by means of the Proportional-Integral-Derivative (PID) algorithm adjust the operation of the expansion valve, while maintaining this set value. They have protection means against exceeding the pressure levels (low and high pressures). EVD controllers have the following modes for adjusting the superheating: (i) the standard one - for refrigerated counters (version with a refrigerator, operation of the compressor with a mixed system, CO₂ system, operation of the condenser with R404A working medium) and to operate the air conditioner/ice water unit (chiller) and (ii) the special one for adjusting the back pressure, pressure and temperature of the bypass of hot gas, of CO₂ gas cooler.

Controllers are often doubled, wherein the second controller controls the additional expansion valve and its task is to control the sub-cooling of the medium supplied to the compressor.

In the known solutions used by manufacturers of heat pumps, in the case of controlling the expansion valve, the positioning of the valve upstream of the compressor depending on the superheating of the medium prevails. Superheating is the difference between the current temperature of the medium upstream of the compressor and the dew point temperature. Dew point, calculated on the basis of the pressure upstream of the compressor, is the temperature at which the process gas liquefaction begins. Having calculated the superheating, it is known how many degrees are yet to be reached for the process of gas condensation to begin.

To ensure fail-safety of the compressor, superheating value should be maintained above zero. If the superheating value goes below zero, liquid begins to get into the compressor, which can lead to the compressor failure. On the other hand, if the superheating value is too high, efficiency of the heat pump decreases, the efficiency being determined by COP coefficient which is the ratio of the resulting amount of heat in the condenser to the consumed energy used for powering the compressor (typically electric energy). As a result, the compressor superheats, which reduces its efficiency and durability.

The aim of the known solutions is therefore to maintain the superheating at a constant level. The superheating value must be high enough to take into account the measurement errors and must not decrease below zero degrees Celsius. At the same time, it must be low enough so as not to reduce the efficiency of the heat pump.

In the known solutions, the superheating is controlled by the expansion valve. By determining the position of this valve, medium pressure upstream of the compressor can be changed, which at the same time also affects its temperature. In the known adjustment method, at first the measurement of the current temperature and pressure of the working medium upstream of the compressor is performed, and then dew point for the current pressure value of the working medium is determined by means of a polynomial. Then, the current value of superheating is determined as a temperature value representing the difference between the current temperature of the working medium upstream of the compressor and the dew point. In the next step, the difference between the set value of superheating and the resulting current value of superheating is determined and a new position of the expansion valve is determined and set by means of a PID controller.

Under ideal operating conditions, the set value of superheating should be as close as possible to 0 and at the same time high enough so as not to cause condensation of the medium. It is known, however, that this is not possible because of measurement error and inaccuracy in determining the dew point by means of a polynomial. Superheating is set to around three degrees.

In turn, US2016102902 (A1) describes a method for controlling a heat pump, in which the temperature of the working fluid after compression is brought to the minimum value, higher by 1 Kelvin than the dew point. In this method, the working fluid is delivered to a compressor, and at the inlet of the compressor it is superheated using a control valve placed on a bypass line connecting the high-pressure area at the outlet of the compressor to the low-pressure area at the inlet of the compressor, wherein the flow of hot gas into the working fluid through the bypass line is controlled by means of the valve.

In the above described method for controlling the superheating by means of the expansion valve, the problem is to determine the exact value of superheating since the use of a polynomial to determine the dew point is always associated with significant calculation inaccuracies. In some situations, even a third-degree polynomial does not correspond to the actual value of the dew point. Calculation errors lead to erroneous determination of superheating, whereas the more accurately the dew point will be determined, the more the set superheating value can be reduced to be only minimally higher than the dew point.

Solutions related to methods for controlling the process of thawing the heat exchanger of the lower heat source in the heat pump are also known. The thawing process tends to be interchangeably referred to as defrosting process in the specialist terminology (and also in the following description).

For example, US2015107278 (A1) describes a device and a method for controlling the prevention of icing of the evaporator of the heat pump in the air conditioning systems of vehicles. The device comprises a subunit of a cooling medium circuit, the subunit being able to operate at the same time as a heat pump and an air conditioning system. In this device, a control and adjustment unit is connected with signal lines to at least a first temperature sensor, to further sensors (in particular for detecting ambient air temperature and vehicle speed), to the expansion valve, to a radiator fan and a compressor of the cooling medium, in order to directly or indirectly adjust the flow cross-section of the expansion valve and the rotational speed of the electric compressor of the cooling medium or in order to control the valve of the mechanical compressor of the cooling medium and in order to start the radiator fan of the vehicle during operation of the heat pump.

In turn, in the known solutions relating to the use of heat pumps in buildings, frost formation on the exchanger is detected through measurement of difference in temperatures of the exchanger and the inlet air. When this difference reaches the level programmed in a controller, the process of thawing the heat exchanger is started. Simultaneously with the analysis of difference in temperatures between the outside temperature and the temperature of the exchanger, a mechanism for forcing a cyclic thawing of the heat pump is used. In this type of solutions, thawing is forced after a predetermined time, e.g. 2-3 hours. For example, one of the systems for controlling the operation of the heat pump, which is commercially available, has such a thawing mode. If the cyclic thawing is activated once every few hours (about 10 times per day), the heat pump, in such solutions, despite the absence of any real need for defrosting, activates a mechanism to force thawing. The criteria to be satisfied at the time include, for example, temperature difference between the exchanger and the supply temperature of the lower source.

There are also known solutions relating to methods for controlling the switching on of a compressor in a heat pump, in which the system of temperatures of lower and upper sources of the heat pump is brought to the point in the operation area of the compressor, defined by manufacturers as a so-called operating envelope. In the known solutions, additional heat sources (e.g. electric heaters) are always activated when there is a need to start the heat pump, regardless of the amount of energy stored in the system of the upper source. This leads to excessive energy consumption compared to the actual demand of the system for energy needed to ensure operation of the compressor in the safe operating envelope.

Furthermore, solutions are known in which loss of the working medium in a heat pump compressor, that could indicate damage or unsealing of the system, is detected by analysing measurements of pressure values of this medium in a hydraulic system of the heat pump.

### Summary of the Invention

The aim of the present solutions was to overcome the above-mentioned problems associated with the use of known methods for controlling the operation of the heat pump, and in particular methods for controlling the expansion valve for adjusting the superheating of the working medium, methods for controlling the process of thawing the heat exchanger of the lower heat source and methods for controlling the switching on of the compressor. In particular, one of the aims was to achieve the best efficiency of the heat pump in a useful operating range through such control of the expansion valve that superheating value of the working medium before entering the compressor was as low as possible, but still above zero. Another aim was to accurately determine the degree of frost formation on the exchanger and appropriately limit the number of defrosting operations, and also to eliminate the mechanism for forcing a cyclic thawing of the heat pump, and as a result - to reduce the degree of wear of the compressor and electricity consumption. Yet another aim was to reduce as much as possible the number of switching on operations of the compressor and/or additional heat sources in order to reduce electricity consumption by the pump, and to increase the speed and accuracy of detection of the working medium loss. In other words, the compressor should work as short as possible, not be switched on too often, and during operation - generate the greatest possible amount of heat, optimally using additional heat sources for this purpose, both energy-intensive (e.g. electric heaters) and preferable ones (peak heat sources, that is, energy accumulated under preferable weather conditions). It was therefore desirable to provide such a control of the heat pump operation and of individual processes relating to the components of the pump system, which would increase the efficiency of the heat pump, extend the life of the compressor and ensure faster detection of damages to the hydraulic system.

These aims have been achieved by the solutions according to the invention.

Namely, the inventors of the present solution have concluded that a significant increase in the accuracy of determining the dew point in the method for controlling the expansion valve for adjusting the superheating of the working medium is achieved through the use of a static neural network instead of a polynomial.

In a first aspect, the object of the invention is therefore a method for controlling the expansion valve for adjusting the superheating of the working medium in the heat pump, in which, first, current temperature (t1) and pressure (p1) of the working medium upstream of the compressor are measured, then the dew point (ps) is determined for the current pressure value (p1) of the working medium, whereupon the current value of superheating is determined as a temperature value representing the difference between the current temperature (t1) of the working medium upstream of the compressor and the dew point (ps), and then, the difference between the set value of superheating and the resulting current value of superheating is determined, and a new position of the expansion valve is determined and set by means of the Proportional-Integral-Derivative (PID) controller. In the method according to the invention, the dew point (ps) is determined by means of a unidirectional neural network in which the neurons add up input values (p1) multiplied by the weights assigned to them, and the resulting sum is used as an input value for the hyperbolic tangent function.

Preferably, the structure of the neural network includes one neuron at the input, five hidden neurons and one neuron at the output.

Preferably, the difference between the calculated value of the dew point (ps) and the actual dew point for a given pressure (p1) of the working medium upstream of the compressor amounts to no more than 0.05°C.

The concept of operation of the neural network is based on the brain structure. Through learning, the network selects weights of connections between neurons. The neurons add up inputs multiplied by weights, and the sum is used as an input to the hyperbolic tangent function. Having selected an appropriate amount of neurons, a structure of static functions describing physical phenomena can be reproduced. The neural network provides far greater accuracy, i.e. reflects the characteristics describing the dew point of the working medium more accurately than approximations with an nth-degree polynomial. In the worst case, the difference between the result determined using the polynomial and the actual dew point is 2 degrees, and for the neural network, this difference does not exceed 0.05 degrees. In the embodiment implemented using the polynomial, the result of the determination of the dew point has a mean error of the order of 0.42%, and with the use of the neural network, this error decreases to 0.02%.

Additional advantages of using the neural network for determination of the dew point are speed of performing calculations and relatively little memory being required. With a small number of neurons (e.g. in a 1-5-1 arrangement, indicated above as preferable), amount of calculation does not constitute a big burden for the processor. This neural network requires only 13 parameters (of "double" type numbers, i.e. double-precision floating-point numbers) to be stored.

Furthermore, the inventors of the present solution found that in the method for controlling the process of thawing the exchanger of the lower heat source in the heat pump, measurement of the temperature difference upstream and downstream of the exchanger of the lower source and obtaining information about air humidity allow accurate statement of the fact that the exchanger is frosted, and consideration of power of the heat pump compressor and, on this basis, determination of consumption of heat energy by the exchanger and coefficient of performance (COP) of the heat pump allow detection of a deterioration of the latter as a result of an increase in the icing of the exchanger. This allows reducing the number of defrosting operations, which in turn helps to reduce the compressor wear and electricity consumption, thereby increasing the SCOP coefficient which defines the ratio of heat energy obtained or necessary to heat the building, in the whole heating season, to the electricity provided in the whole season.

Therefore, in a second aspect, the object of the invention is a method for controlling the thawing process of an exchanger of a lower heat source in a heat pump, in which:
temperature and pressure of a working medium are measured upstream and downstream of the exchanger of the lower source of the heat pump,
and air humidity is measured, and also air temperature in the environment upstream and downstream of the exchanger is measured,
and moreover the instantaneous power obtained from the lower source of the heat pump in a characteristic period of time is integrated, thereby resulting in the value of energy obtained from the lower source of the heat pump in this period of time,
and then, the thus determined value of energy is compared to the value of energy taken from historical data previously obtained for the corresponding conditions of temperature and pressure of the working medium upstream and downstream of the exchanger, of air humidity and air temperature in the environment upstream and downstream of the exchanger,
and having found that the energy is lower than a set percentage of energy value taken from historical data -the compressor is activated in the mode for thawing the exchanger.

By measuring the temperature difference for the temperatures upstream and downstream of the exchanger of the lower source and by obtaining information about air humidity, it is possible to more accurately determine whether the exchanger has been actually frosted to a significant extent from the point of view of energy efficiency of the heat pump. Taking into account the consumption of heat energy and COP allows reducing the frequency of switching on of the thawing process. It may turn out that, despite fulfilment of the condition of the set difference of aforementioned temperature, under some weather conditions of light frost formation (detected by the temperature and humidity sensors as described above), there is not any need to switch on the heat pump in the thawing mode as the heat consumption by the exchanger is sufficiently high (high COP value). A light frost formation on the exchanger is even preferable as it increases the heat exchange surface. By using this type of control mechanisms, it is possible to reduce the number of defrosting operations, which in turn helps to reduce the compressor wear and electricity consumption, thereby increasing the SCOP coefficient. Furthermore, it is possible to ensure the efficient operation of the exchanger without any forced temporary thawing.

In a third aspect, the object of the invention is a method for controlling the switching on of the compressor in the heat pump, in which
at set time intervals, the difference between the set value and the current supply temperature of the heating circuit is determined, and on its basis and on the basis of measurements of temperature and humidity of outside air, coefficient of heat demand Qh of the heated building is dynamically determined, the coefficient being cyclically modified according to the said temperature difference,
wherein after reaching the set value of Qh coefficient, the compressor is switched on,
during operation of the compressor, values of difference of the set temperature and the current temperature for each time interval are subtracted from the value of Qh coefficient,
having reached the value of Qh coefficient equal to 0 or the maximum temperature of the heat pump, that is, the maximum temperature for which the concerned heat pump has been designed, the compressor is switched off,
and in the period when the compressor is off, Qh coefficient is cyclically increased on the basis of the said temperature difference and increases to a value dynamically dependent on the heat demand of the building,
wherein the switching on of the compressor in the heat pump is controlled through said modifications of Qh coefficient in such a way that on the basis of weather forecast for the nearest period of time, the heated object demand for heat during this period is estimated, and then, under preferable weather conditions, a predetermined amount of heat is stored, and under adverse weather conditions, the stored heat is used to limit the number of additional switching on operations of the additional heat source, wherein by preferable weather conditions, a high humidity value and a high temperature of outside air constituting the lower source of the heat pump are meant, and by adverse weather conditions, a low humidity value and a low temperature of outside air constituting the lower source of the heat pump are meant.

The maximum temperature for which the concerned heat pump has been designed is a design parameter of the pump.

Heat storage under preferable operating conditions of the heat pump is intended to ensure the heat pump operation within the operating envelope and to avoid the need to switch on the additional heat source in case of adverse weather conditions under which temperature parameters go beyond the range of the operating envelope.

Preferably, the weather forecast is obtained from the Internet network.

Preferably, in the method according to the invention, during dynamic determination of the value of Qh coefficient, data recorded by temperature and air humidity sensors in the heated building during previous cycles of the heat pump operation are taken into account.

Preferably, in the method according to the invention, at least one additional heat source is used, and for each of the additional heat sources, the set Qh value is dynamically determined depending on parameters of the energy which can be delivered by this source. In a more preferred case, the additional heat source in the heat pump is switched on only when the energy stored in the upper source system of the heat pump is not sufficient to ensure the operation of the pump in the system of evaporation and condensation temperatures of the lower and upper source located in the area of the operating envelope of the heat pump.

Preferably, the additional heat source is selected from an electric heater or a back-up boiler.

In another preferred variant of the method according to the invention, additionally, based on the comparison of current operating conditions of the upper source system of the heat pump and archival data from COP measurements in the current operating conditions of this system, and based on data from pressure measurements of the working medium in the hydraulic system of the heat pump, a loss of working medium in the compressor and/or damage to the medium circuit is/are detected.

Preferably, in the method according to the invention, the heat accumulator is a thermal buffer, such as water tank or circuit of underfloor heating system.

The method for controlling the switching on of the compressor in the heat pump according to the above-mentioned third aspect of the present invention allows reducing the number and duration of switching on operations of the compressor and also of additional heat sources, such as electric heaters, which allows consumption optimisation of the electric energy delivered to the system using the heat pump to heat the building. This solution is based on the use of COP coefficient for controlling, which not only allows frequency optimisation of switching on operations of the compressor and possible use of additional heat sources, but also ensures much more sensitive, and therefore earlier, detection of loss of the working medium or damage to the hydraulic system than it was possible in the case of the control based on the analysis of measurements of pressure values for the working medium in the hydraulic system.

The use of data concerning weather forecasts for control purposes allows the operating mode in which the heat pump starts when heat demand is low, in order to store the heat in the system, e.g. in a buffer to be used in a period when weather conditions are adverse, COP coefficient falls and a risk of frost formation on the exchanger of the lower source increases or there is a need to use the back-up heat source. The point is that in a situation of heat demand of the system (in order to maintain the operation of the compressor in the operating envelope) to use, in the first place, the heat stored beforehand in a peak heat source in the upper source system, and thereby to minimise the number and duration of switching on operations of the additional heat source, such as an electric heater. This results in energy savings at the moment of starting the heat pump and simultaneously ensures the compressor operation within the envelope, thereby preventing the compressor from too rapid wear. By dynamically selected values of Qh coefficient (heat demand of building), dependent primarily on the time of year, it is possible to more effectively affect SCOP coefficient of the heat pump.

The object of the invention is also a method for controlling the operation of the heat pump, comprising at least one of the processes mentioned above.

### Brief Description of Figures in the Drawing

The invention will be now presented in greater detail in preferred embodiments, with reference to the accompanying drawings, in which:
- Fig. 1: shows a block diagram of a known-in-the-art method for controlling the expansion valve on the basis of superheating with the use of the polynomial function to determine the dew point,
- Fig. 2: shows the result of determining the dew point by means of the polynomial,
- Fig. 3: shows an enlargement of a dependence fragment from Fig. 2,
- Fig. 4: shows an enlargement of a dependence fragment from Fig. 2,
- Fig. 5: shows a block diagram of the method for controlling the expansion valve on the basis of superheating with the use of the neural network to determine the dew point according to the first aspect of the invention,
- Fig. 6: shows the principle of operation of an artificial neuron in the neural network used in the method according to the first aspect of the invention,
- Fig. 7: shows comparison of the results of determining the dew point by means of the polynomial and the neural network,
- Fig. 8: shows comparison of the results of determining the dew point by means of the polynomial and the neural network for higher pressure values,
- Fig. 9: shows comparison of the error in determining the dew point by means of the polynomial and the neural network,
- Fig. 10: shows operating envelopes of the compressor for heating and cooling,
- Fig. 11: shows a diagram of the method for controlling the operation of the compressor according to the invention.

### Detailed Description of the Invention

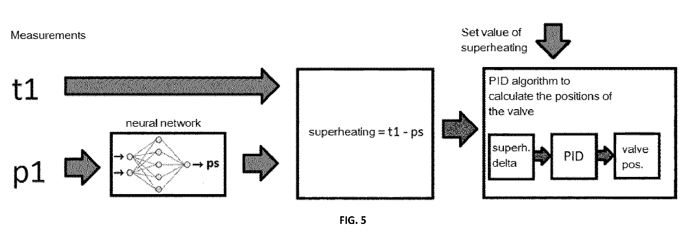

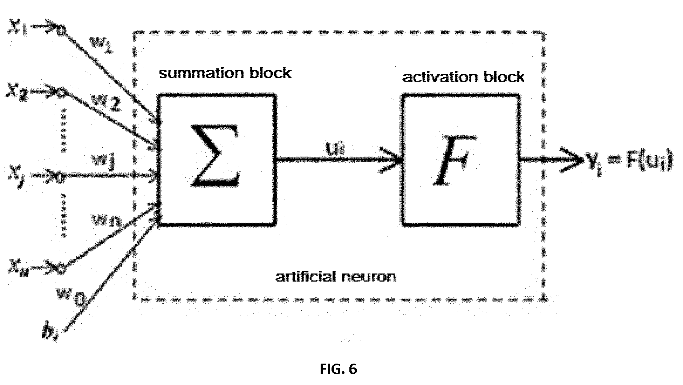

A block diagram of the method for controlling the expansion valve for adjusting the superheating of the working medium in the heat pump according to the first aspect of the present invention is illustrated in Fig. 5. According to this diagram, the current temperature (t1) and pressure (p1) of the working medium upstream of the compressor are first measured. Then, the dew point (ps) is determined for the current pressure value (p1) of the working medium. The dew point (ps) is determined by means of a unidirectional neural network in which the neurons add up input values (p1) multiplied by the weights assigned to them, and the resulting sum is used as an input value for the hyperbolic tangent function. After determining the dew point (ps), the current value of superheating is determined as a temperature value representing the difference between the current temperature (t1) of the working medium upstream of the compressor and the dew point (ps). In the next step, the difference between the set value of superheating and the resulting current value of superheating is determined and a new position of the expansion valve is determined and set by means of the PID controller. The general principle of operation of a single artificial neuron is illustrated in Fig. 6. Structure of the used neural network included one neuron at the input, five hidden neurons and one neuron at the output.

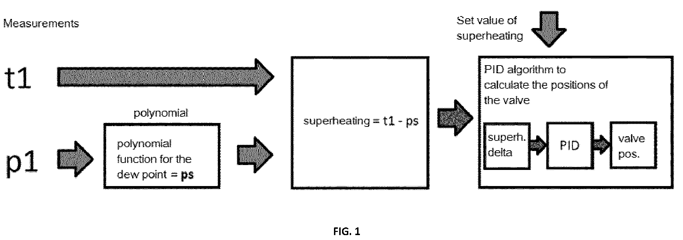

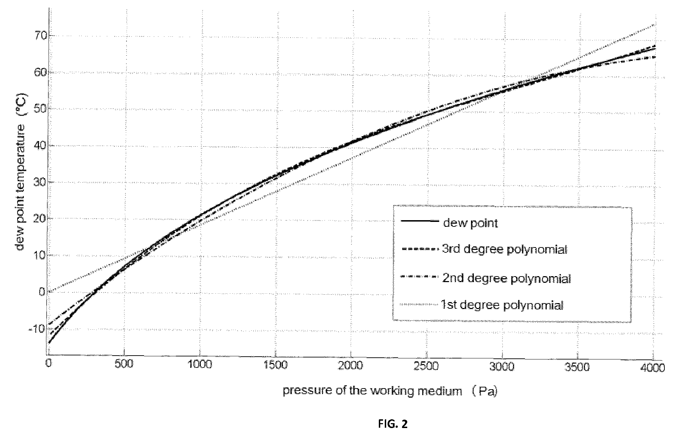

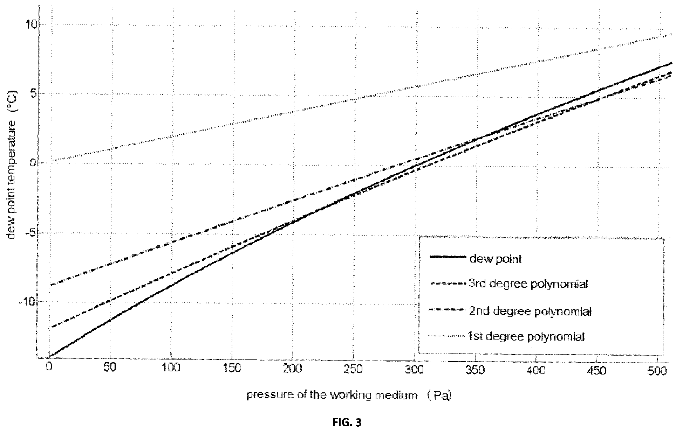

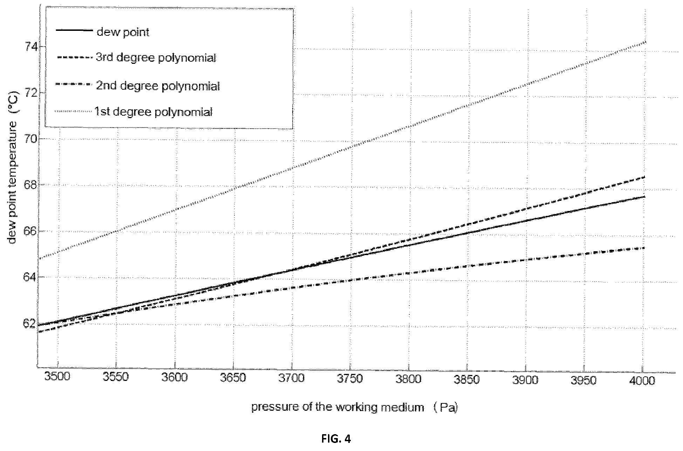

For comparison, in the block diagram of Fig. 1, a known method for controlling the expansion valve for adjusting the superheating of the working medium in the heat pump is illustrated, wherein the polynomial function is used to determine the dew point (ps). The result of determining the dew point by means of the polynomial is shown in Fig. 2, and Figs. 3 and 4 show enlarged fragments of dependence t = f(p).

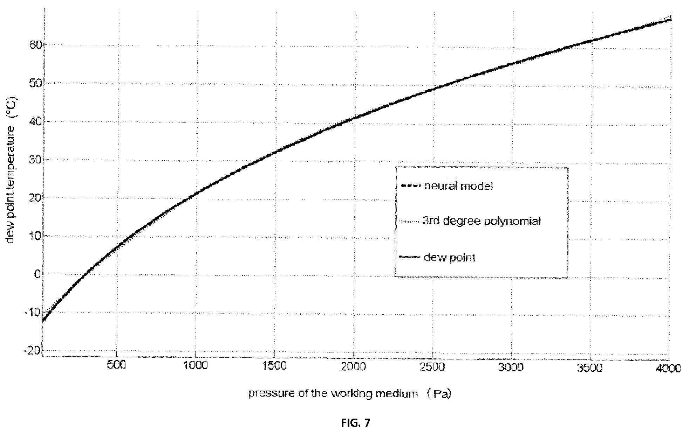

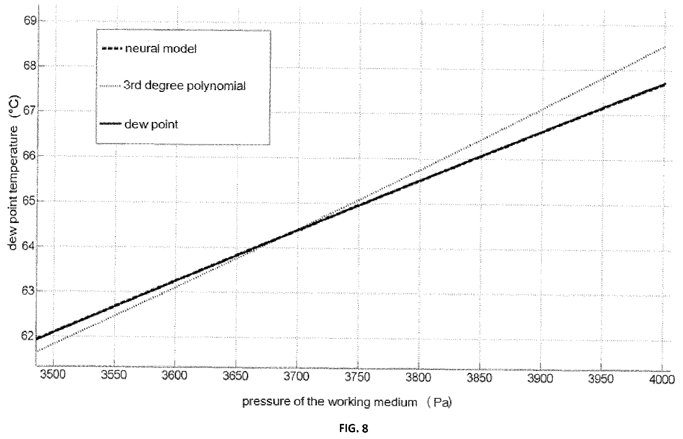

To demonstrate the differences in the accuracy of determining the dew point (ps) by means of the polynomial (according to the prior art) and by means of the neural network (according to the invention), Fig. 7 shows, on a single graph of dependency t = f(p), comparison of the results of determining the dew point by means of a third-degree polynomial and a neural network. Fig. 8 shows an enlarged fragment of the same dependency for higher pressure values. As shown in Figs. 7 and 8, the curve determined by the neural network coincides with measurement data (illustrating the actual course of changes in the dew point as a function of pressure), while the curve determined by the polynomial shows significant deviations, especially for higher pressures values (Fig. 8). In the worst case, the difference between the value of the dew point (ps) calculated by means of the polynomial and the actual dew point for a given pressure value (p1) of the working medium upstream of the compressor was 2 degrees, while in the method using the neural network, this difference did not exceed 0.05 degrees.

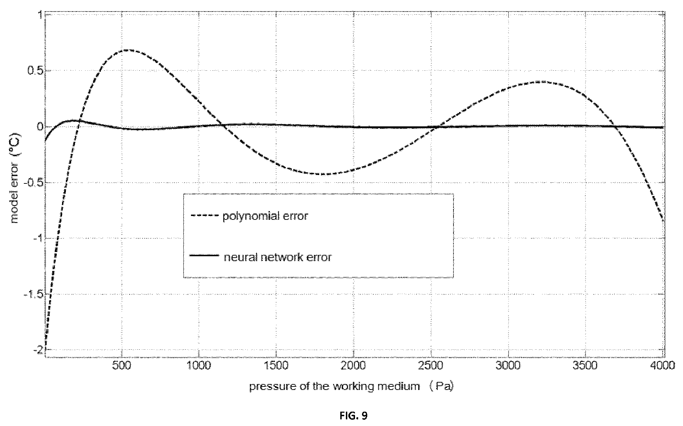

In Fig. 9, a comparison of the error in determining the dew point by means of the polynomial and the neural network is shown. The result of determining the dew point (ps), obtained with the use of the polynomial, has a mean errors of the order of 0.42%. With the use of the neural network, this error falls to 0.02%. It can be seen that if the aim is to set the superheating as close as possible to 0 (and, indeed, this is the aim of the method according to the invention), then improving the accuracy by approx. 0.5 degrees very positively affects the accuracy of control. The value of the dew point calculated by the neural network is maintained close to zero in all cases. The dew point calculated by means of the polynomial "oscillates" around zero which negatively affects the accuracy of control.

In the method for controlling the process of thawing the exchanger of the lower heat source in the heat pump, according to the second aspect of the present invention, temperature and pressure of the working medium are measured upstream and downstream of the exchanger of the lower source of the heat pump, and air humidity is measured, and also air temperature in the environment upstream and downstream of the exchanger is measured, and moreover the instantaneous power obtained from the lower source of the heat pump in a characteristic period of time is integrated, thereby resulting in the value of energy obtained from the lower source of the heat pump in this period of time, and then, the thus determined value of energy is compared to the value of energy taken from historical data previously obtained for the corresponding conditions of temperature and pressure of the working medium upstream and downstream of the exchanger, of air humidity and air temperature in the environment upstream and downstream of the exchanger, and having found that the energy is lower than a set percentage of energy value taken from historical data - the compressor is activated in the mode for thawing the exchanger.

In this method, temperature difference between the inlet and outlet air is compared. When this difference is lower than the pre-set value, this means that the exchanger does not receive any heat. At the same time by measuring the power consumed by the compressor, it is possible to determine whether the exchanger has been covered with ice (and as a result, despite the increased power consumption, the exchanger does not effectively fulfil its function). In such a state, it is possible to determine the necessity of defrosting based on historical data of temperature and humidity and on the current electrical power consumed by the compressor. Figuratively speaking, in historical data at specific temperatures and humidity, better values of COP coefficient were obtained. Therefore, the exchanger must be frosted. The compressor being switched on in the thawing mode means lack of heat delivery to the heated circuit and that the heat is collected from the upper source till the excess of ice is removed. Analysis of changes in COP coefficient allows detection of frost formation because a higher degree of icing of the exchanger reduces the efficiency of the heat pump.

The above-mentioned characteristic time period depends on many parameters of the devices and systems used, such as, among others, stability of supply temperature of the lower source, air humidity, thermodynamic characteristics of heat receivers. For example, a characteristic time period can range from one to eight hours. It is convenient to divide the day into three eight-hour periods which by nature of environmental conditions are characterised by different ambient temperatures and different air humidity.

Similarly, the above-mentioned percentage of energy taken from historical data depends on many parameters of the devices and systems used, such as, among others, supply temperature of the lower source, supply temperature and return temperature of the upper source, medium flow in the upper source. For example, this percentage may be from 5 to 20 for the pumps with small powers of a few kW, to above 50% for pumps of considerable power, i.e. tens of kW to hundreds of kW. This means that the decrease in energy currently obtained from the lower source to values of 80-95%, 50-95%, respectively, of the values read from historical data triggers the defrosting process.

The method for controlling the process of thawing the lower heat source in the heat pump, thanks to an accurate determination of frost formation on the exchanger, eliminates the need of using a mechanism for cyclically forcing the thawing of the heat pump, which, in the prior-art solutions, is used simultaneously with the analysis of the temperature difference between the outside temperature and the exchanger temperature.

Reduction of supply power of the evaporator fan at high air humidity determined from measurements of temperature and humidity of the inlet air allows also increasing COP coefficient of the heat pump.

In the method for controlling the switching on of the compressor in the heat pump, according to the third aspect of the present invention, first, at set time intervals, eg. every 120 s, the difference between the set value and the current supply temperature of the heating circuit is determined, and on its basis and on the basis of measurements of temperature and humidity of outside air, coefficient of heat demand Qh (accumulator) of the heated building is dynamically determined, the coefficient being cyclically modified according to the said temperature difference.

The above-mentioned set time intervals depend on many parameters of the devices and systems used, such as, among others, stability of supply temperature of the lower source, air humidity, thermodynamic characteristics of heat receivers. For example, these time intervals may range from 60 seconds to over a dozen minutes.

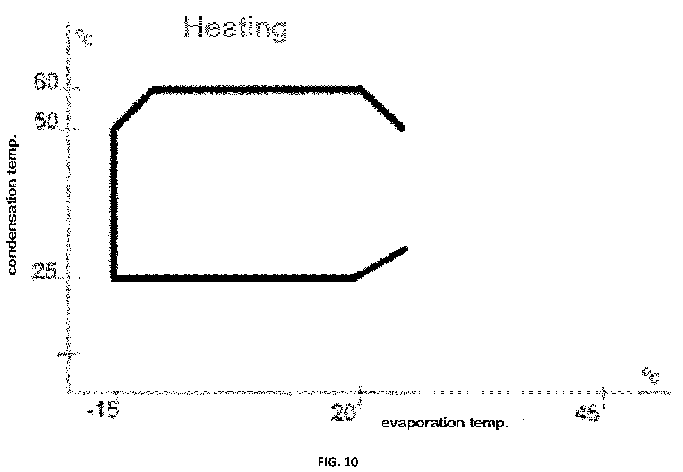

In Fig. 10, operating envelopes of the compressor for heating and cooling are shown. The above-described method for controlling the switching on of the compressor ensures that it works all the time within the operating envelope, which prolongs the time of trouble-free use of the compressor, and thereby - of the entire heat pump. At the same time, the number of switching on operations of an additional heat source (e.g. an electric heater), which contributes to a decrease in COP and SCOP coefficients, generating in turn some additional consumption of electric energy, is limited only to cases where the energy stored in the upper source system is insufficient to keep the compressor within the operating envelope.

Together with the passage of time (where the unit is e.g. 1 minute), when the compressor is switched off, the temperature difference between the temperature set to the heat pump and the current supply temperature of, e.g., a buffer or other heating circuit is added. This temperature is suitably passed to the block of the heat pump. This should be the lowest temperature difference between the current one and the set one - for every heating circuit.

After reaching the set value of Qh coefficient [e.g. 100 (parameter 651- LPQh)], the compressor is switched on. During operation of the compressor, values of difference of the set temperature and the current temperature for each time interval (taking into account delta times t - insensitivity) are subtracted from the value of Qh coefficient (accumulator). The compressor works till it reaches the value of Qh coefficient equal to 0 or the set temperature of the heat pump (most often calculated from the heating curve - if active).

In the period when the compressor is off, Qh coefficient is cyclically increased on the basis of the said temperature difference and is increased to a value dynamically dependent on the heat demand of the building, e.g. equal to 140. Through dynamically selected values of Qh coefficient mainly dependent on the time of year, the controller is able to affect more effectively SCOP coefficient of the heat pump.

The same dependencies, but with different delta t and Qh settings, are used for additional heat sources.

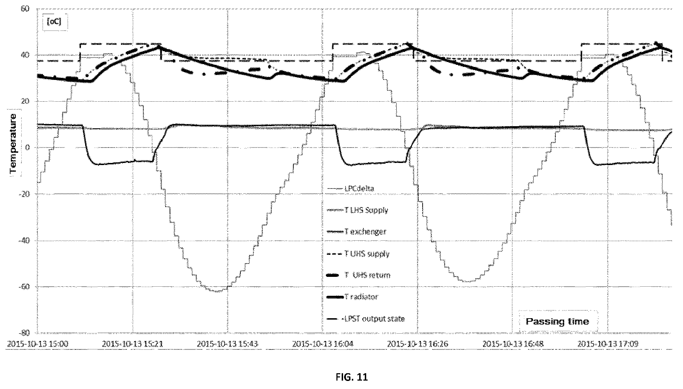

In Fig. 11, a diagram of the method for controlling the operation of the compressor according to the third aspect of the invention is shown. Designation of parameters the course of which is shown in the diagram is given in Table 1, below.

| **Name of the parameter** | **Description of the parameter** | **Unit** | **Remarks** |
|---|---|---|---|
| LPCdelta | Value of temperature difference between the set temperature and the current temperature (taking into account the times of insensitivity for the analysed delta of temperatures) is sampled every LPCSampleTime value. | Derivative of temperature and time | In the description of the method, Qh designation is used. |
| LPCSampleTime | The parameter determines every what unit of time the values of LPCdelta parameter is updated. | [s] | By default 100 s |
| T LHS Supply | supply temperature of the lower source °C | [°C] | |
| T exchanger | temperature measured on the exchanger of the heat pump - evaporator | [°C] | |
| T UHS supply | supply temperature of the upper source | [°C] | |
| T UHS return | return temperature of the upper source | [°C] | |
| T radiator | Temperature measured on the heat receiver (in this case, a heater) | [°C] | Heat receiver (upper source) |
| LST output states | Parameter describing the operating state of the heat pump (on/off) | - | Value 1-on, Value 0 - off |

The graph of fig. 11 shows tests carried out by means of an air heat pump with a heating power of 8kW. This is an air pump of monoblock type, that is, with an integrated exchanger of the lower and upper source in a single structure.

LPST output states refers to the change in operating states, unfortunately, it does not reflect the exact moment of switching on the compressor because it relates to the demand for heating. From the moment of notifying the demand for heating, castdown of circulation pumps and minimum time to start the compressor are taken into account. Then, it can be seen when the compressor is started after the value of T UHS return or T exchanger parameters increases.

The tests were carried out without any help of additional heat sources (e.g. a heater) because the heat reception and transfer were very fast (high dynamics due to the nature of heat reception - heaters).

### Expansion of the method to additional heat sources:

When, despite the compressor operation, the balance of heat gains decreases (lower half of the sine in Fig. 11), then, after exceeding the set values of switching on heaters, the heaters will be activated.

The control is extended to an adaptive algorithm which estimates Qh coefficient, depending on the data collected from temperature sensors located in the building. After a few/a dozen or so operating cycles, the control system is able to "learn" the building.

Pressure sensors measure the pressure of the working medium located in the hydraulic system of the heat pump: high pressure (downstream of the compressor) in the condenser and low pressure (upstream of the condenser) in the evaporator. The controller, having archival data in the form of temperature of the lower and upper source and the pressure values, periodically compares the current data with archival data. When the percentage of deviation of the measured pressure values at similar temperature values is too large, an alarm about a possible unsealing of the system with the working medium or about malfunctioning of the compressor is generated.

The essence of the method is to accumulate heat in a thermal buffer, such as water tank or circuit of underfloor heating system, so as to minimise the number of switching on cycles of the heat pump. Thermal energy, despite the absence of direct heat demand by heating circuits, is still generated by the heat pump until reaching the value of Qh coefficient which determines the heat demand of the whole building. This coefficient is variable and depends mainly on the time of year, therefore the regulator analyses all possible information, including data from outside air temperature and humidity sensors, as well as data obtained from the weather forecast for the coming days. On the basis of these data, the controller dynamically selects Qh coefficient for a particular building in which a heat source operates, in this case a heat pump. The same relations apply to additional heat sources which can cooperate with the heat pump, e.g. a back-up boiler, an electric heater, etc. Then, coefficients of heat demand are dynamically selected for each of these sources depending on the parameters of thermal energy which can be delivered by each device.

The higher the desirable difference between the temperature of the lower source and the temperature of the upper source, the more time, and thus the more electric energy need to be delivered to the heat pump to achieve supply of thermal energy for use during adverse weather conditions. Under preferable weather conditions, i.e. at high humidity and temperature of outside air, the pump operates with high COP and there is not any risk of frost formation. In turn, under adverse weather conditions, where the air temperature and humidity are low, additionally the temperature difference of the lower source supply and the upper source supply is large. Then, the heat pump can operate with a low COP or it cannot operate at all due to substantial frost formation. Under these conditions, heat resources accumulated in the peak source are used, and when these are depleted - an additional heat source is switched on.

In a preferred variant, weather forecast is obtained from Internet sources. This makes it possible to estimate the heat demand of the heated building at a given time, and consequently - to calculate the cost of obtaining this heat, depending on the price of individual energy carriers.

If the analysis of parameters in the controller shows that despite reaching the set temperature for the heat accumulator (e.g. buffer), operating conditions for the heat pump are at a given moment more preferable than those expected in the future, e.g. at night (eg. when there is a large decrease in temperature below zero) and if the accumulator can accept an excess of heat, then the controller generates a command to continue the operation of the pump until deterioration of the conditions or absence of further increase in temperature in the buffer (which means that the pump is unable to deliver more energy or that the accumulator is unable to further accept the heat).

The controller, implementing the method according to the third aspect of the present invention, based on the analysis of the current and archival data obtained from measurements of COP under current operating conditions of the system, and of the data recorded by pressure sensors of the working medium in the hydraulic system of the heat pump, is able to determine the loss of the working medium in the compressor. Decrease in energy gains and in COP coefficient (ratio of thermal energy supplied to the building to the electricity needed to power the devices) is another piece of information that, combined with the pressure information, creates one consistent algorithm allowing clear determination of deterioration of the operating conditions of the heat pump system. If under similar weather conditions which have a large impact on parameters of the working medium, there is a noticeable decrease in COP coefficient with similar heat reception on the upper source, then a potential damage/unsealing of the system containing the working medium is signalled.

## Claims

1. A method for controlling the expansion valve for adjusting the superheating of a working medium in the heat pump, in which, at first current temperature (t1) and pressure (p1) of the working medium upstream of a compressor are measured, then the dew point (ps) is determined for the current pressure value (p1) of the working medium, whereupon the current value of superheating is determined as a temperature value representing the difference between the current temperature (t1) of the working medium upstream of the compressor and the dew point (ps), and then, the difference between the set value of superheating and the resulting current value of superheating is determined, and a new position of the expansion valve is determined and set by means of the Proportional-Integral-Derivative (PID) controller, **characterised in that** the dew point (ps) is determined by means of a unidirectional neural network in which the neurons add up input values (p1) multiplied by the weights assigned to them, and the resulting sum is used as an input value for the hyperbolic tangent function.

2. The method according to claim 1, wherein the structure of the neural network includes one neuron at the input, five hidden neurons and one neuron at the output.

3. The method according to claim 1 or 2, wherein the difference between the calculated value of the dew point (ps) and the actual dew point for a given value of pressure (p1) of the working medium upstream of the compressor amounts to no more than 0.05°C.

4. The method for controlling the thawing process of an exchanger of a lower heat source in a heat pump, wherein:
temperature and pressure of a working medium are measured upstream and downstream of the exchanger of the lower source of the heat pump,
and air humidity is measured, and also air temperature in the environment upstream and downstream of the exchanger is measured,
and moreover the instantaneous power obtained from the lower source of the heat pump in a characteristic period of time is integrated, thereby resulting in the value of energy obtained from the lower source of the heat pump in this period of time,
and then, the thus determined value of energy is compared to the value of energy taken from historical data previously obtained for the corresponding conditions of temperature and pressure of the working medium upstream and downstream of the exchanger, of air humidity and air temperature in the environment upstream and downstream of the exchanger,
and having found that the energy is lower than a set percentage of energy value taken from historical data - the compressor is activated in the mode for thawing the exchanger.

5. The method for controlling switching on of a compressor in a heat pump, wherein
at set time intervals, the difference between the set value and the current temperature of a heating circuit supply is determined, and on its basis and on the basis of measurements of temperature and humidity of outside air, coefficient of heat demand Qh of the heated building is dynamically determined, the coefficient being cyclically modified according to the said temperature difference,
wherein after reaching the set value of Qh coefficient, the compressor is switched on,
during operation of the compressor, values of difference of the set temperature and the current temperature for each time interval are subtracted from the value of Qh coefficient,
having reached the value of Qh coefficient equal to 0 or the maximum temperature of the heat pump, that is, the maximum temperature for which the concerned heat pump has been designed, the compressor is switched off,
and in the period when the compressor is off, Qh coefficient is cyclically increased on the basis of the said temperature difference and is increased to a value dynamically dependent on the heat demand of the building,
wherein the switching on of the compressor in the heat pump is controlled through said modifications of Qh coefficient in such a way that on the basis of weather forecast for the nearest period of time, the heated object demand for heat during this period is estimated, and then, under preferable weather conditions, a predetermined amount of heat is stored, and under adverse weather conditions, the stored heat is used to limit the number of additional switching on operations of the additional heat source, wherein by preferable weather conditions, a high humidity value and a high temperature of outside air constituting the lower source of the heat pump are meant, and by adverse weather conditions, a low humidity value and a low temperature of outside air constituting the lower source of the heat pump are meant.

6. The method according to claim 5, wherein the weather forecast is obtained from the Internet network.

7. The method according to claim 5 or 6, wherein during dynamic determination of the value of Qh coefficient, data recorded by temperature and air humidity sensors in the heated building during previous cycles of the heat pump operation are taken into account.

8. The method according to claim 5, 6 or 7, wherein at least one additional heat source is used, and for each of the additional heat sources, the set Qh value is dynamically determined depending on parameters of the energy which can be delivered by this source.

9. The method according to claim 8, wherein the additional heat source in the heat pump is switched on only when the energy stored in the upper source of the heat pump is not sufficient to ensure the operation of the pump in the system of evaporation and condensation temperatures of the lower and upper source located in the area of the operating envelope of the heat pump.

10. The method according to any one of claims 5-9, wherein additionally, based on the comparison of current operating conditions of the upper source system of the heat pump and archival data from COP measurements in the current operating conditions of this system, and based on data from pressure sensors of the working medium in the hydraulic system of the heat pump, a loss of working medium in the compressor and/or damage to the working medium system is/are detected.

11. The method for controlling the operation of the heat pump, **characterised in that** it comprises at least one of the processes mentioned in claims 1-10.
